# EUROPEAN PATENT APPLICATION

(11) **EP 2 333 318 A2**
(43) Date of publication of application: **15.06.2011**
(21) Application number: 10191831.6
(22) Date of filing: 19.11.2010
(51) Int. Cl.: F03D 1/06

(54) **Monitoring joint efficiency in wind turbine rotor blades**

(30) Priority: 01.12.2009 US 628411
(71) Applicant: General Electric Company, Schenectady, NY 12345 (US)
(72) Inventor: Kavala, Venkateswara Rao, 534347 Andhra Pradesh (IN); Nadampalli, Narasimhamurthy Raju, 560066 Bangalore, Karnataka (IN)
(74) Representative: Bedford, Grant Richard

(57) **Abstract**

A split wind turbine rotor blade (108) includes a first rotor blade member (118), a second rotor blade member (128), a joint (220) between the first rotor blade member (118) and the second rotor blade member (128), and a joint monitoring device (404) disposed in an area of the joint (220) for monitoring a structural integrity of the joint (220).

## Description

The present disclosure generally relates to wind turbines, and, more particularly, to monitoring the condition of joints in a split rotor blade for a wind turbine.

Wind turbines have received increased attention as an environmentally safe and relatively inexpensive alternative energy source. With this growing interest, considerable efforts have been made to develop wind turbines that are reliable and efficient.

Generally, a wind turbine includes a rotor comprised of a hub and a plurality of blades mounted on the hub. The rotor is coupled to a generator through a gearbox. The generator is mounted within a housing or nacelle, which is positioned on top of a tubular tower. Utility grade wind turbines (i.e., wind turbines designed to provide electrical power to a utility grid) can have large rotors (e.g., thirty or more meters in diameter). Blades of such a rotor transform wind energy into a rotational torque or force that drives a generator. The rotor is supported by the tower through a bearing that includes a fixed portion coupled to a rotatable portion.

Current and future technologies in wind turbines are looking for higher rotor diameters to capture more energy. The larger wind turbines can have rotor blade assemblies that are larger than 90 meters in diameter. Large commercial wind turbines are capable of generating between one and one-half megawatts to five megawatts of power. The size, shape and weight of rotor blades are factors that contribute to the energy efficiencies of wind turbines. As rotor blade size increases, extra attention needs to be given to the structural integrity of the rotor blades.

Rotor blades of longer length, due to their length and larger sizes, are generally associated with manufacturing and transport difficulties. Split wind turbine rotor blades, i.e. rotor blades comprised of two or more joinable members, have been developed to address the difficulties associated with longer rotor blades.

The split blade concept is important in longer rotor blades due to transport and other structural implications. Split wind turbine rotor blades will include a joint between each of the joinable members of the rotor blade. However, joints of any kind are critical in rotor blades due to the usage of directional sensitive materials like fiber-reinforced composites. Monitoring the structural critical parameters of the joint is advantageous to detect early indications of joint failures, avoid catastrophic failure of the rotor blade as well as the wind turbine in the event of a joint failure, and to improve present and future joint methodologies.

Accordingly, it would be desirable to provide a system that addresses at least some of the problems identified above.

As described herein, the exemplary embodiments address one or more of the above or other disadvantages known in the art.

One aspect of the exemplary embodiments relates to a split wind turbine rotor blade. In one embodiment, the split wind turbine rotor blade includes a first rotor blade member, a second rotor blade member, a joint between the first rotor blade member and the second rotor blade member, and a joint monitoring device disposed in an area of the joint for monitoring a structural integrity of the joint.

Another aspect of the exemplary embodiments relates to a system for monitoring a joint of a split wind turbine blade. The system includes a joint monitoring device disposed on the split wind turbine blade for monitoring a structural parameter of the joint, and a controller configured to receive monitored parameter data from the joint monitoring device and to determine whether the monitored parameter data meets or exceeds a predetermined threshold value for the monitored structural parameter.

A further aspect of the exemplary embodiments relates to a method of monitoring joint efficiency of a joint in a split wind turbine blade. In one embodiment, the method includes receiving parameter data from a joint monitoring device, the joint monitoring device monitoring a structural parameter of the joint, determining if the received parameter data exceeds a threshold level, and generating a joint efficiency control signal if the received parameter data exceeds the threshold level.

These and other aspects and advantages of the exemplary embodiments will become apparent from the following detailed description considered in conjunction with the accompanying drawings. It is to be understood, however, that the drawings are designed solely for purposes of illustration and not as a definition of the limits of the invention, for which reference should be made to the appended claims. Moreover, the drawings are not necessarily drawn to scale and unless otherwise indicated, they are merely intended to conceptually illustrate the structures and procedures described herein. In addition, any suitable size, shape or type of elements or materials could be used.

Various aspects and embodiments of the present invention will now be described in connection with the accompanying drawings, in which:
FIG. 1 shows a side elevational view of a wind turbine according to an embodiment of the present disclosure;
FIG. 2 shows a top perspective view of a split rotor blade for a wind turbine according to an embodiment of the present disclosure;
FIGS. 3 and 4 are perspective views of a section of the wind turbine blade of FIG. 2;
FIGS. 5-12 are schematic views of exemplary wind turbine blades according to embodiments of the present disclosure;
FIG. 13 is a block diagram of a wind turbine control system according to an embodiment of the present disclosure;

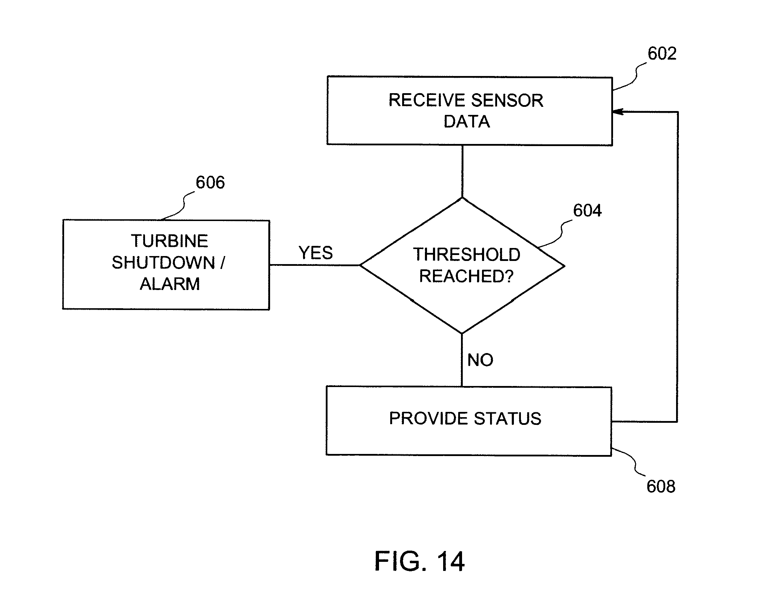

FIG. 14 is a flow chart of a process according to an embodiment of the present disclosure; and

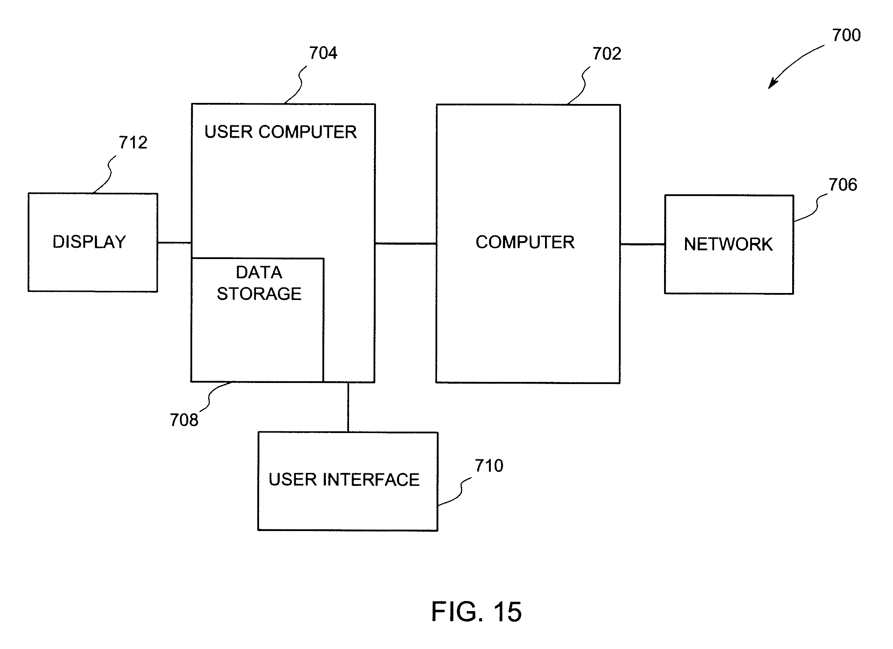

FIG. 15 is a block diagram of an apparatus that can be used to practice aspects of the present disclosure.

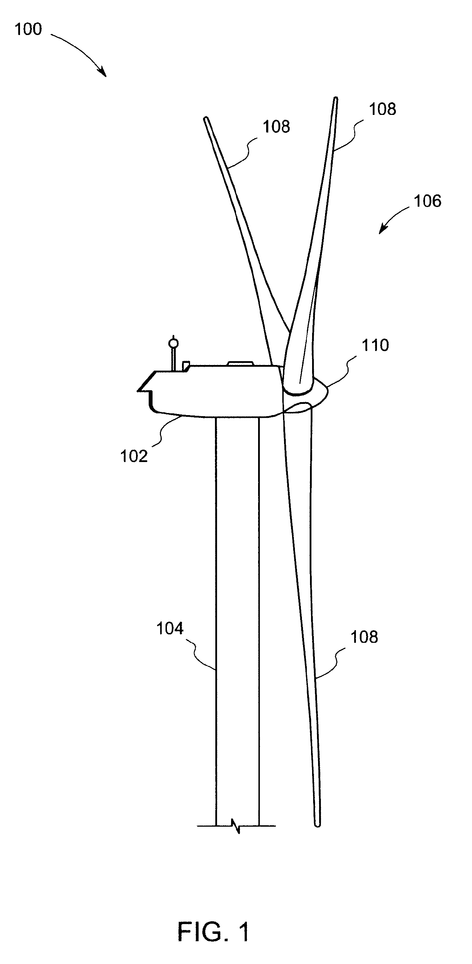

FIG. 1 illustrates an exemplary wind turbine 100 incorporating aspects of the disclosed embodiments. The aspects of the disclosed embodiments are generally directed to monitoring the condition of a structural joint in a split rotor blade for a wind turbine. In one embodiment, a condition based monitoring system for monitoring wind turbine split rotor blade joint efficiency is provided. Sensors and measuring equipment are used to monitor certain parameters of the joint that can include, for example, deflection, strain and vibration of the joint(s). The sensors can work on any one of, or combination of, different principles, including for example mechanical, electrical, magnetic, laser, electronic, ultrasonic, thermoelectric and smart structures principles. A monitoring or control system, such as a Supervisory Control and Data Acquisition System ("SCADA"), can be used to monitor any one or more of the above-referenced parameters. A comparison is made between the monitored parameter(s) and threshold limit(s) stored in the system, which can be established from the blade test data or the design and material allowable limits of the joint, or other suitable factors. When a value for a monitored parameter(s) meets or exceeds the threshold limit, an indication or other suitable signal can be generated. Based on this information, the particular turbine can be stopped or suitable action initiated to prevent damage, or further damage, to the wind turbine. In this manner, one can detect in advance any joint defects in the rotor blade and prevent catastrophic damage to the blade and wind turbine. Also, the monitored data can be collected and can be useful in future joint designs and direct material productivity (DMP).

Referring to FIG. 1, the wind turbine 100 includes a nacelle 102 and a rotor 106. Nacelle 102 is a housing mounted atop a tower 104, only a portion of which is shown in FIG. 1. The nacelle 102 includes a generator (not shown) disposed therewithin. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or off-shore locations. The rotor 106 includes one or more turbine blades 108 attached to a rotatable hub 110. In this exemplary embodiment, the wind turbine 100 includes three turbine blades 108.

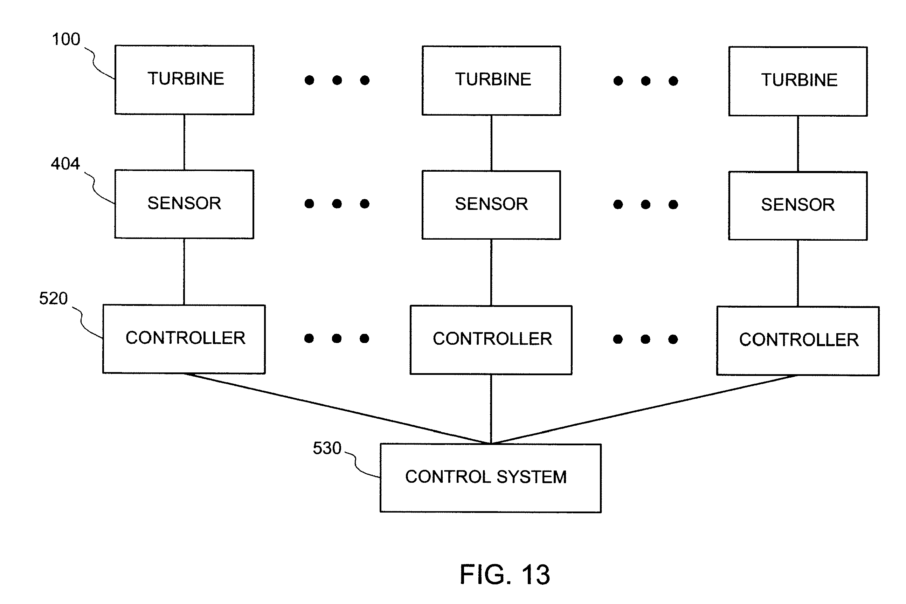

The wind turbine 100 includes a wind turbine control system 530, an example of which is generally shown in FIG. 13. The control system 530 is generally configured to adjust wind turbine functions to control power production of the wind turbine 100. The wind turbine control system includes hardware and software configured to perform turbine functions as appreciated by one of ordinary skill in the art. The wind turbine functions include, but are not limited to, regulation of blade rotational speed. The blade rotational speed may be controlled by adjusting parameters including the blade pitch and generator torque.

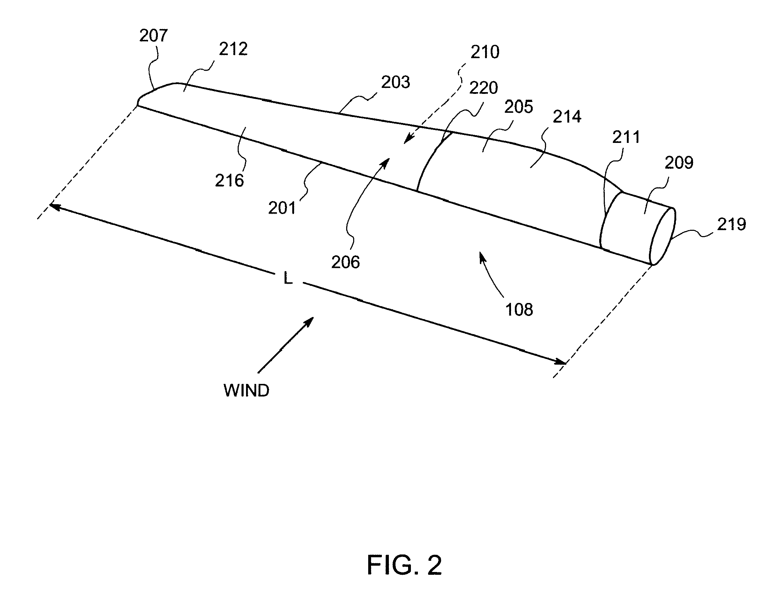

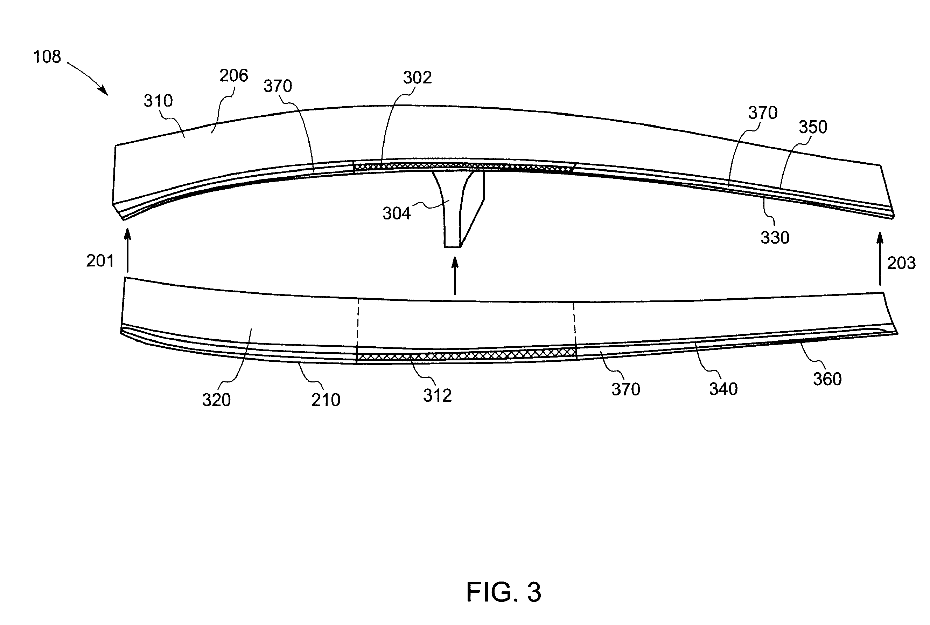

FIG. 2 illustrates an exemplary turbine blade 108 according to an embodiment of the present disclosure. The turbine blade 108 includes an airfoil portion 205 and a root portion 209. The airfoil portion 205 includes a leading edge 201, a trailing edge 203, pressure side 206, suction side 210, a tip 207, and a root edge 211. The turbine blade 108 has a length L between the inner edge 219 of the root portion 209 and the tip 207. The root portion 209 is connectable to the hub 110 of the wind turbine 100 shown in FIG. 1. The turbine blade 108 shown in FIG. 2 is a split rotor blade, and includes at least one joint 220. FIG. 3 is an exemplary illustration of a cross section of rotor blade 108 showing a pair of spar caps 302 and a shear web 304 integrated therein. The rotor blade 108 may have a swept shape giving it a curved contour running from the distal end to the proximal end of the rotor blade 108. At least two spar caps 302 may be integrated within the rotor blade 108, generally running from its distal end to its proximal end and having generally the same swept shape as the rotor blade 108. The shear web 304 may also generally have the same swept shape as the rotor blade 108 and may be joined to the inside surfaces of each spar cap 302 at an approximately perpendicular orientation. It should be appreciated that the same general configuration, including the spar caps 302 and one or more shear webs 304, applies to a rotor blade 108 not having a swept shape.

As shown in FIG. 3, the rotor blade 108 may include a first shell 310 and a second shell 320, where the first shell 310 may form the top of the rotor blade 108 and the second shell 320 may form the bottom of the rotor blade 108. The first shell 310 and the second shell 320 may include a first and a second inner skin 330, 340, and a first and a second outer skin 350, 360, and each may be constructed from for example, a dry, fibrous material. Further, the first and the second shell 310, 320 may include a core material 370 sandwiched between the inner skins 330, 340 and the outer skins 350, 360 of each shell. The core material 370 is preferably a lightweight material, such as balsa wood, Styrofoam, or the like as is generally known in the art. A spar cap 302 may be placed between the inner skin 330 and the outer skin 350, and adjacent to the core material 370 in shell 310. Similarly, a spar cap 312 may be placed between the inner skin 340 and the outer skin 360, and adjacent to the core material 370 in shell 320. Mating the first and the second shells 310, 320, including the shear web 304 with the spar caps 302, 312 creates the final rotor blade 108 assembly.

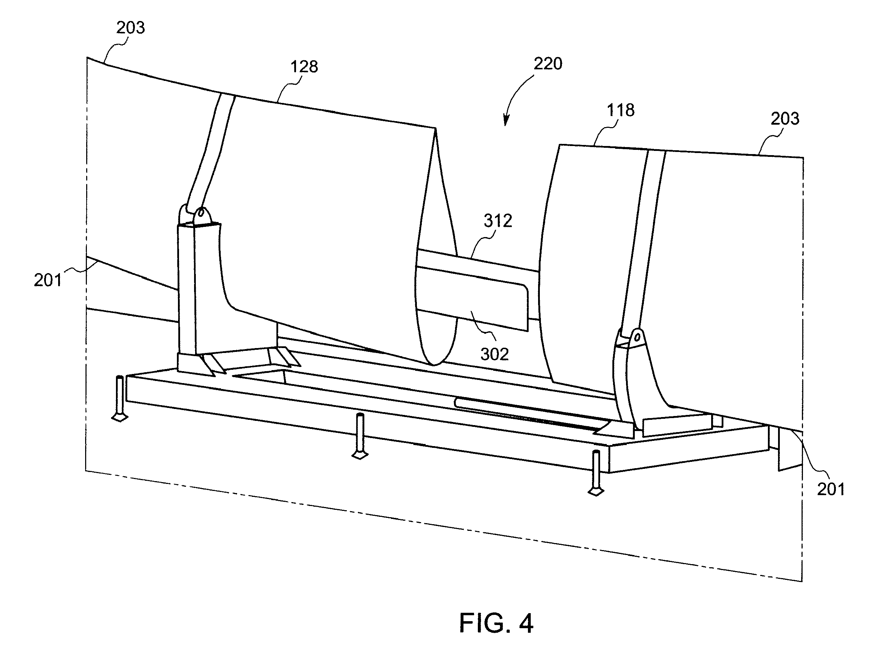

FIG. 4 is an exemplary illustration of a joint 220 in a split rotor blade 108 for a wind turbine. The blade 108 of FIG. 2 is split into two members, referred to as members 118 and 128. In alternate embodiments, the rotor blade 108 can be split into any suitable number of members. Spar cap members 302 and 312 extend across the joint 220.

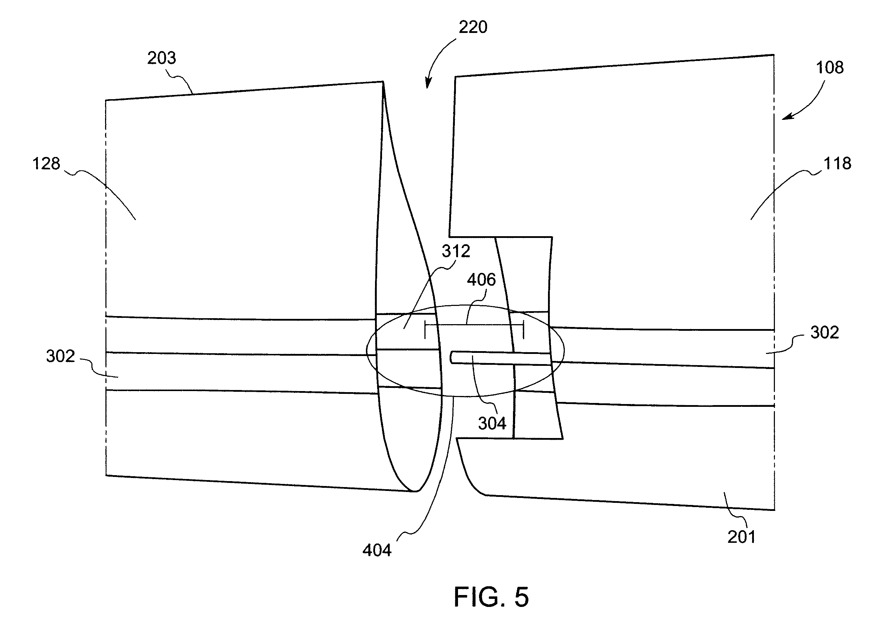

Various aspects of the disclosed embodiments provide for monitoring the structural critical parameters of the joint 220. In one embodiment, a condition based monitoring system for monitoring wind turbine split rotor blade joint efficiency is provided. Sensors and/or measuring equipment are used to monitor certain structural parameters of the joint 220. Referring to FIG. 5, for example, in one embodiment, one or more joint monitoring sensors 404 are disposed at or near the joint 220. In this example, the sensor(s) 404 are located internally to the blade 108 at the location of joint 220, on the spar caps 302, 312. In alternate embodiments, the sensor 404 can be located externally to the blade 108. Although only one joint monitoring sensor 404 is shown in FIG. 5, in alternate embodiments any suitable number of sensors can be used other than including one.

The joint monitoring sensor(s) 404 is generally configured to monitor structural parameters of the joint 220. These parameters can include, but are not limited to, deflection, strain and vibration of the joint(s) or the areas near the joint 220. In the exemplary embodiments described herein, the sensor(s) 404 is placed internally to the blade 108, near or at the location of the joint 220, in order to monitor structural critical parameters related to the joint 220.

In one embodiment, the sensor(s) 404 is a deflection sensor 406. The deflection sensor(s) 406 is generally configured to sense and monitor the deflection levels at the joint 220 of the split blade 108. The deflection sensor(s) 406 can include any suitable deflection monitoring devices, such as, for example, potentiometers, tilt sensors, position indicators and wire-actuated sensors.

In FIG. 5, the deflection sensor(s) 406, also referred to as a transducer(s), is arranged in a substantially straight configuration across the joint 220. In this example, the deflection sensor 406 is shown positioned on the suction side spar cap 312. Although the deflections sensor(s) 406 is shown located on the suction side spar cap 312 in FIG. 5, in alternate embodiments, the deflections sensor(s) 406 can be located on the pressure side spar cap 302.

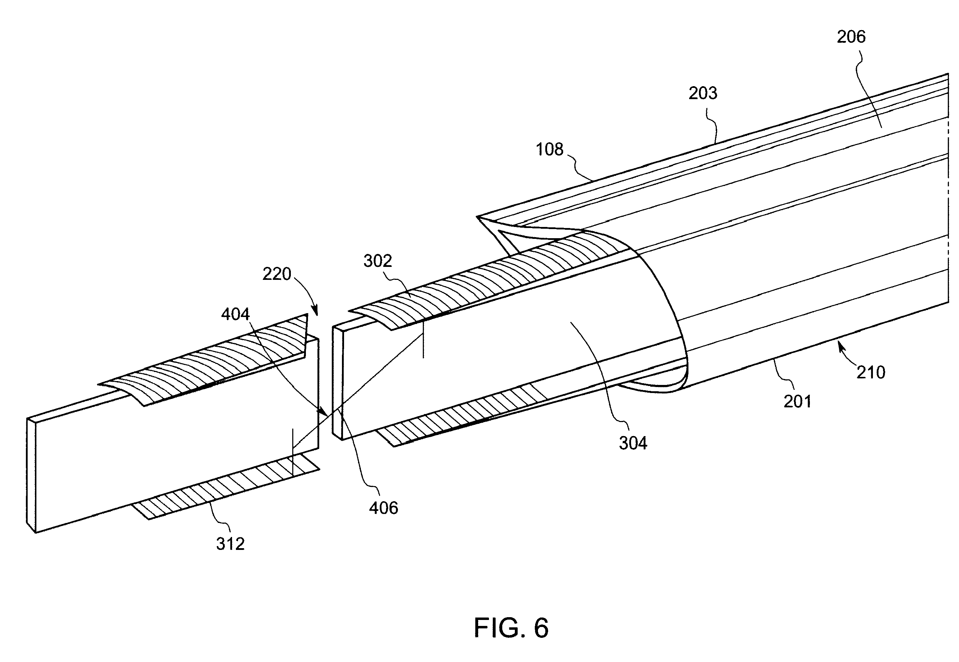

Referring to FIG. 6, in this example, the deflection sensor(s) 406 is arranged in a cross configuration, extending across the joint 220 from pressure side spar cap 302 to suction side spar cap 312.

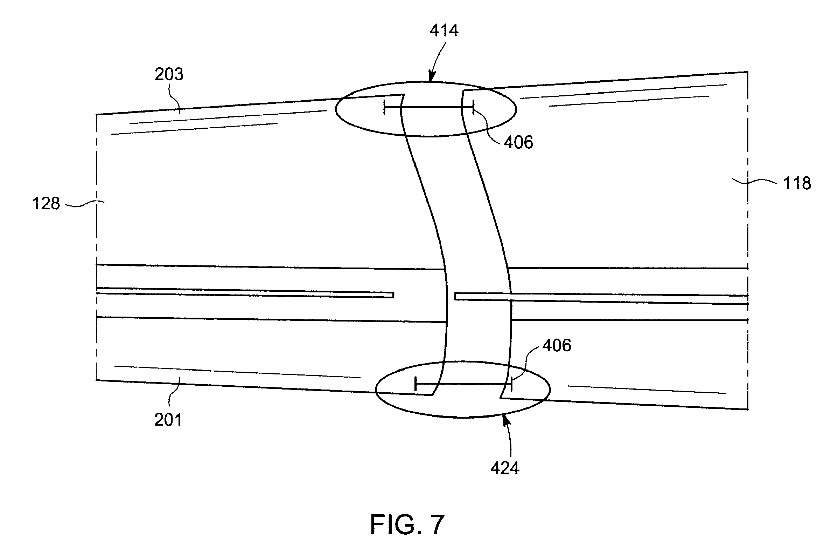

Although the examples with respect to FIGS. 5 and 6 show the deflection sensor(s) 406 positioned on the spar cap 302, 312, in alternate embodiments, the placement of the deflection sensor 406 can be any suitable location within or near the blade joint 220. For example, referring to FIG. 7, a pair of sensors 414, 424 are respectively positioned along the leading edge 201 and trailing edge 203 of the blade members 118 and 128.

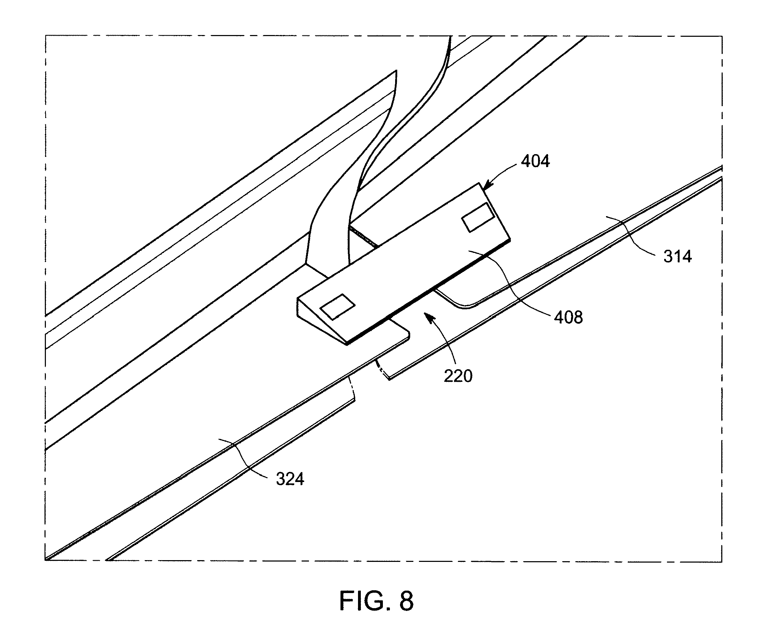

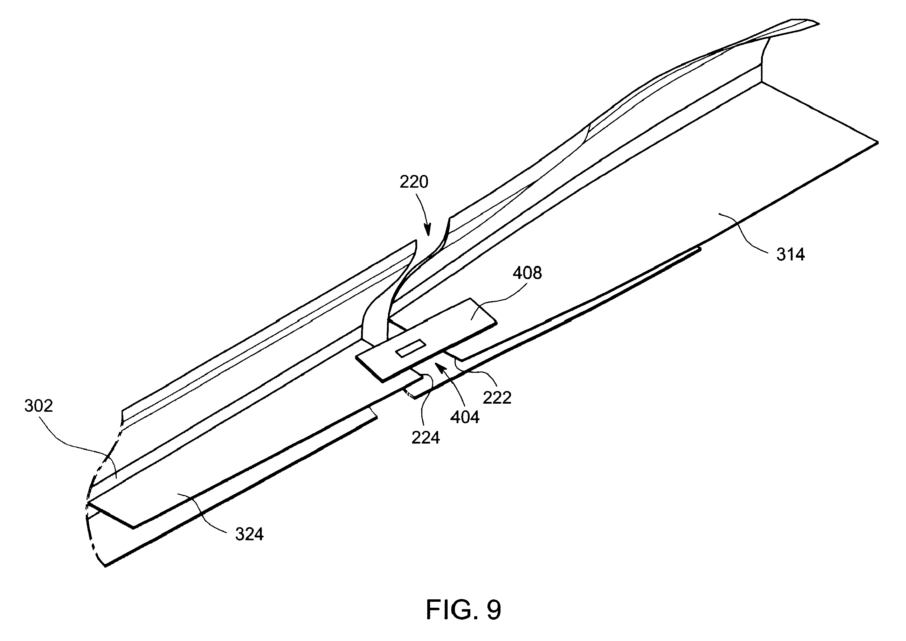

In one embodiment, referring to FIGS. 8 and 9, the joint monitoring device 404 comprises one or more strain gauge sensors 408. The strain gauge sensor(s) 408 will sense and measure the strain levels at the joint 220 of the split blade members 118, 128. The strain gauge sensor(s) 408 can be positioned across the joint 220 on the shear web 314, 324 as shown in FIG. 8, or the joint end locations 222, 224 as shown in FIG. 9. In alternate embodiments, the strain gauge sensor(s) 408 can be positioned at any structural critical location related to the blade joint 220, such as the leading edge 201 and trailing edge 203 of the blade 108. The strain gauge sensor(s) 408 can include, but are not limited to, uni-axial or rosette type strain gauge devices.

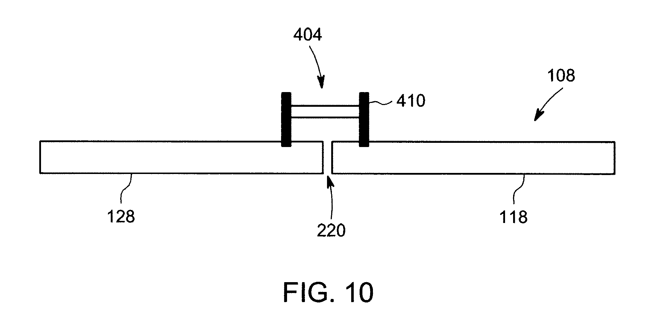

In one embodiment, referring to FIG. 10, the joint monitoring device 404 comprises a brittle strip member 410. The brittle strip member 410 is generally configured to connect across two parts of the blade 108, such as blade members 118 and 128. The brittle strip member 410 is also electrically conductive and is used to pass a signal. If the deflections/shocks at the joint 220 are above the threshold limit, the brittle strip member 410 will fail. This causes a break in the brittle strip member 410, in which case the signal is no longer carried through the brittle strip member 410. Detection of the break can be used to determine a potential failure condition of the joint 220 as is described herein.

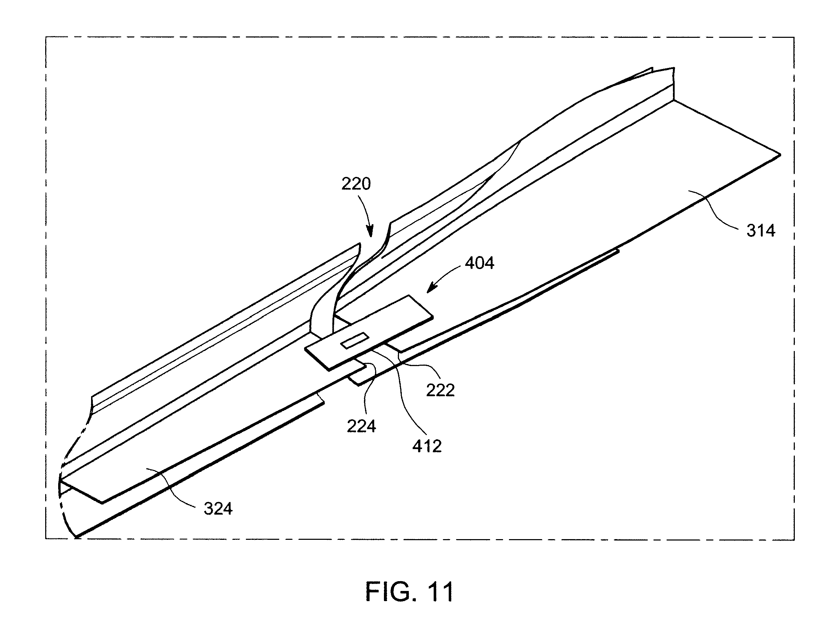

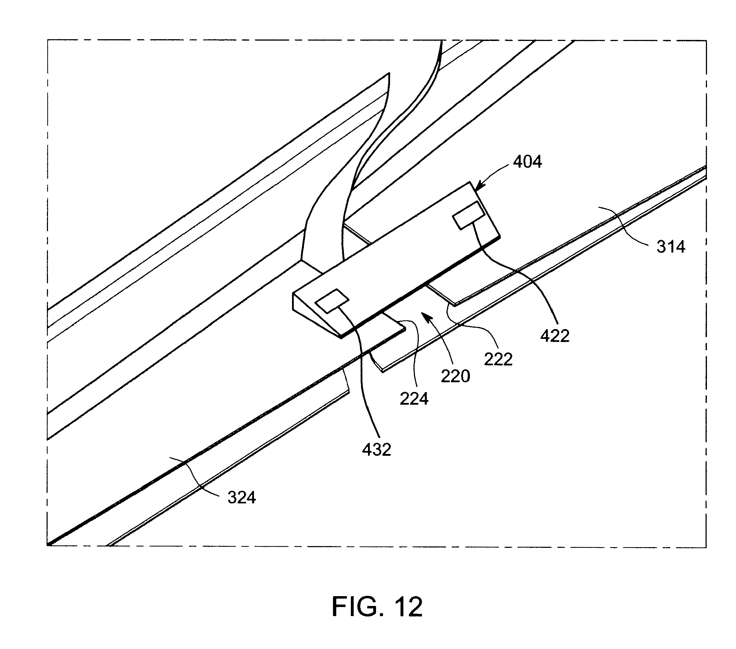

In one embodiment, referring to FIGS. 11 and 12, the joint monitoring device 404 comprises one or more vibration sensor(s) 412. The vibration sensor(s) 412 will sense and monitor any one or combination of acceleration, shock, vibration and movement levels at or near the joint 220 of the split blade members 118, 128. Less stiff blade members will introduce a higher vibration when the joint 220 is at risk. The vibration sensor(s) 412 can include, but is not limited to, mechanical and tilt vibration sensors, micro-electrical-mechanical ("MEMS") inclinometers and tilt angle switches, MEMS acceleration, shock and vibration sensors, and rugged package sensors.

In the exemplary embodiment illustrated in FIG. 11, the vibration sensor(s) 412 is positioned on the shear web panel 304. In FIG. 12, a vibration sensor 422, 432 is positioned near each end location 222, 224 of the joint 220. In alternate embodiments, the sensor(s) 412 can be positioned at any critical location with respect to the blade joint 220 where acceleration, shock, vibration and movement levels at the joint 220 of the split blade members 118, 128 can be measured. This can include the spar caps 302 and first and second shell 310, 320 of each blade member 118, 128.

Various aspects of the disclosed embodiments provide for monitoring the efficiency of the joint 220 using one or more joint monitoring sensors 404. The sensor(s) will provide data with respect to the structural conditions or parameters of the joint 220. The monitored parameters can be used to minimize or prevent damage to the blade 108 or wind turbine 100. In one embodiment, the parameters measured by the sensor 404 are provided to a control system 530, such as that shown in FIG. 5. The control system 530 is configured to interpret the received data, detect any indications of joint failure, or deviations from predetermined threshold values, and initiate appropriate action.

FIG. 5 is a block diagram of an exemplary wind farm that includes a plurality of wind turbines 100. In one embodiment, the joint monitoring sensor(s) 404 associated with each wind turbine 100 are coupled to the controller 520 of the individual turbines 100. The controller(s) 520 can be configured to receive, process and interpret the information received from the sensor(s) 404. The controller(s) 520 are in turn coupled to a control system 530, which among other things, receives and interprets the information from each controller 520 relative to the data from sensors 404. The control system 530 can determine when preventative or corrective action is required and initiate appropriate processes. In one embodiment, the control system 530 is a centralized wind farm control system. In alternate embodiments, the individual controllers 520 can be coupled to standalone wind farm controllers, which are then coupled to a centralized system. The coupling between the various components shown in FIG. 5 can be any suitable connection for sending and receiving electronic data, including, but not limited to hardwire connections and wireless connections.

The condition based monitoring system of the disclosed embodiments is configured to detect a joint 220 failure condition in advance, and take action that will prevent catastrophic damage to the respective blade 108 and wind turbine 100. In one embodiment, detecting a joint failure condition can include comparing the measured parameter data from each sensor 404 to a predetermined threshold limit for the measured parameter. If the predetermined value is met or exceeded, this can be indicative of a failure condition. In this situation, the particular turbine can be stopped, or other suitable action taken, such as for example an alarm or notification. The threshold limit of the measured parameter(s) can be set and determined in any suitable manner, such as by, for example, blade test data or allowable limits of the materials and joint as determined during blade design.

In one embodiment, the controller 520 receives the measured parameter data from the sensor 404. The controller 520 can be configured to interpret the data. If the data indicates a joint failure condition, for example, by comparing the measured parameter data to predetermined values, the controller 520 can be configured to generate a signal that will cause the respective wind turbine 100 to shut down. In one embodiment, the controller 520 sends the suitable signal to the control system 530. The control system 530 initiates action to shut down the respective turbine 100. Alternatively, the controller 520 can be configured to send a shutdown signal directly to the respective turbine 100.

Referring to FIG. 6, in one embodiment, sensor data related to a particular turbine 100 is received at 602, either in the respective controller 520 or in the control system 530. The sensor data is measured parameter data as detected by the sensor 404.

The measured parameter data as indicated by the sensor 404 is compared at 604 to a threshold level. In one embodiment, if the threshold level is met or exceeded, the turbine is identified at 606 for immediate action. This can include, for example, identifying the particular turbine on a user interface of the control system 530, initiating an automatic shutdown and/or or sounding an alarm. If the threshold level is not met, the turbine 500 can be left to its continued operation and/or its status at 608. The operational status can be shown by a display. For example, in a wind farm control system, there can be a display indicator for each wind turbine 500. The operational status of each turbine can be identified on a display of the control system 530. In one embodiment, the display can be color-coded so as to be able to easily identify or distinguish turbines for which an alert or shutdown is indicated or initiated. In alternate embodiments, any suitable method of distinguishing turbines can be used.

The disclosed embodiments may also include software and computer programs incorporating the process steps and instructions described above. In one embodiment, the programs incorporating the process described herein can be stored on or in a computer program product and executed in one or more computers. FIG. 7 is a block diagram of one embodiment of a typical apparatus 700 incorporating features that may be used to practice aspects of the invention. The apparatus 700 can include computer readable program code means stored on a computer readable storage medium, such as a memory for example, for carrying out and executing the process steps described herein. In one embodiment, the computer readable program code is stored in a memory of the apparatus 700. In alternate embodiments, the computer readable program code can be stored in memory or memory medium that is external to, or remote from, the apparatus 700. The memory can be direct coupled or wireless coupled to the apparatus 700.

As shown, a computer system or controller 702 may be linked to another computer system or controller 704, such that the computers 702 and 704 are capable of sending information to each other and receiving information from each other. In one embodiment, the computer system 702 could include a server computer or controller adapted to communicate with a network 706. Alternatively, where only one computer system is used, such as the computer system 704, it will be configured to communicate with and interact with the network 706. Computer systems 704 and 702, such as the controller(s) 520 and control system 530 of FIG. 5, can be linked together in any conventional manner including, for example, a modem, wireless, hard wire connection, or fiber optic link. Generally, information, such as the data from the sensors 404 can be made available to one or both computer systems 702 and 704 using a communication protocol typically sent over a communication channel or other suitable connection or line, communication channel or link. In one embodiment, the communication channel comprises a suitable broadband communication channel.

The computer systems 702 and 704 are generally adapted to utilize program storage devices embodying machine-readable program source code, which is adapted to cause the computer systems 702 and 704 to perform the method steps and processes disclosed herein. The program storage devices incorporating aspects of the disclosed embodiments may be devised, made and used as a component of a machine utilizing optics, magnetic properties and/or electronics to perform the procedures and methods disclosed herein. In alternate embodiments, the program storage devices may include magnetic media, such as a diskette, disk, memory stick or computer hard drive, which is readable and executable by a computer. In other alternate embodiments, the program storage devices could include optical disks, read-only-memory ("ROM") floppy disks and semiconductor materials and chips.

The computer systems 702 and 704 may also include a microprocessor for executing stored programs. The computer system 704 may include a data storage or memory device 708 on its program storage device for the storage of information and data. The computer program or software incorporating the processes and method steps incorporating aspects of the disclosed embodiments may be stored in one or more computer systems 702 and 704 on an otherwise conventional program storage device. In one embodiment, the computer systems 702 and 704 may include a user interface 710, and/or a display interface 712, such as a graphical user interface, from which aspects of the disclosed embodiments can be presented and/or accessed. The user interface 710 and the display interface 712, which in one embodiment can comprise a single interface, can be adapted to allow the input of queries and commands to the systems, as well as present the results of the analysis of the sensor data, as described with reference to FIGS. 5 and 6, for example.

The aspects of the disclosed embodiments provide for monitoring the condition of a structural joint in a split rotor blade for a wind turbine. Sensors and measuring equipment are used to monitor certain parameters of the joint. A comparison can be made between the monitored parameter(s) and threshold limit(s) stored in the system. When a value for a monitored parameter(s) meets or exceeds the threshold limit, an indication or other suitable signal can be generated. Based on this information, the particular turbine can be stopped or other suitable action initiated to prevent damage, or further damage, to the wind turbine. In this manner, joint defects in the rotor blade can be detected in advance and catastrophic damage to the blade and wind turbine prevented.

Thus, while there have been shown, described and pointed out, fundamental novel features of the invention as applied to the exemplary embodiments thereof, it will be understood that various omissions and substitutions and changes in the form and details of devices illustrated, and in their operation, may be made by those skilled in the art without departing from the spirit of the invention. Moreover, it is expressly intended that all combinations of those elements and/or method steps, which perform substantially the same function in substantially the same way to achieve the same results, are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

Various aspects and embodiments of the present invention are defmed by the following numbered clauses:
1. A split wind turbine rotor blade comprising:
   a first rotor blade member;
   a second rotor blade member;
   a joint between the first rotor blade member and the second rotor blade member; and
   a joint monitoring device disposed in an area of the joint for monitoring a structural integrity of the joint.
2. The split wind turbine rotor blade of clause 1, wherein the joint monitoring device comprises a deflection sensor, a strain sensor or a vibration sensor.
3. The split wind turbine rotor blade of any preceding clause, wherein the joint monitoring device is disposed across the joint between the first rotor blade member and the second rotor blade member.
4. The split wind turbine rotor blade of any preceding clause, wherein each of the first and second rotor blade members comprises a first shell, a second shell, a first spar cap, a second spar cap, and at least one shear web.
5. The split wind turbine rotor blade of any preceding clause, wherein the joint monitoring device is disposed across the joint and coupled between the first spar cap of the first rotor blade member and the first spar cap of the second rotor blade member.
6. The split wind turbine rotor blade of any preceding clause, wherein the joint monitoring device is disposed across the joint and coupled between the first spar cap of the first rotor blade member and the second spar cap of the second rotor blade member.
7. The split wind turbine rotor blade of any preceding clause, wherein the joint monitoring device is disposed across the joint and coupled to the at least one shear web.
8. The split wind turbine rotor blade of any preceding clause, wherein the joint monitoring device comprises a mechanical, electrical, magnetic, laser, electronic, ultrasonic, thermoelectric or smart structure device.
9. The split wind turbine rotor blade of any preceding clause, wherein the joint monitoring device is disposed internally relative to the first blade member and the second blade member.
10. The split wind turbine rotor blade of any preceding clause, wherein the joint monitoring device is disposed externally relative to the first blade member and the second blade member.
11. A system for monitoring a joint of a split wind turbine blade, comprising:
   a joint monitoring device disposed on the split wind turbine blade for monitoring a structural parameter of the joint; and
   a controller configured to receive monitored parameter data from the joint monitoring device and determine whether the monitored parameter data meets or exceeds a predetermined threshold value for the monitored structural parameter.
12. The system of any preceding clause, wherein the joint monitoring device comprises a deflection sensor, a strain sensor or a vibration sensor.
13. The system of any preceding clause, wherein the split wind turbine blade comprises a first blade member and a second blade member, and wherein the joint monitoring device is disposed across the joint between the first blade member and the rotor blade member.
14. The system of any preceding clause, wherein the joint monitoring device is disposed across the joint and coupled between a first spar cap of the first rotor blade member and a second spar cap of the second rotor blade member.
15. The system of any preceding clause, wherein the joint monitoring device is disposed across the joint and coupled to the at least one shear web.
16. The system of any preceding clause, wherein the controller is further configured to cause an automatic shutdown of a wind turbine if monitored parameter data from a joint monitoring device of the wind turbine meets or exceeds a predetermined threshold value for a monitored structural parameter.
17. A method of monitoring joint efficiency of a joint in a split wind turbine blade, the method comprising:
   receiving parameter data from a joint monitoring device, the joint monitoring device monitoring a structural parameter of the joint;
   determining if the received parameter data meets or exceeds a threshold level; and
   generating a joint efficiency control signal if the received parameter data meets or exceeds the threshold level.
18. The method of any preceding clause, further comprising initiating an automatic shutdown of a wind turbine corresponding to the split wind turbine blade if the received parameter data meets or exceeds the threshold level.
19. The method of any preceding clause, wherein the joint monitoring device comprises a deflection sensor, a strain sensor or a vibration sensor.
20. The method of any preceding clause, wherein in the joint monitoring device comprises a mechanical, electrical, magnetic, laser, electronic, ultrasonic, thermoelectric or smart structure device.

## Claims

1. A split wind turbine rotor blade (108) comprising:
a first rotor blade member (118);
a second rotor blade member (128);
a joint (220) between the first rotor blade member (118) and the second rotor blade member (128); and
a joint monitoring device (404) disposed in an area of the joint (220) for monitoring a structural integrity of the joint (220).

2. The split wind turbine rotor blade (108) of claim 1, wherein the joint monitoring device (404) comprises a deflection sensor (406), a strain sensor or a vibration sensor (412).

3. The split wind turbine rotor blade (108) of any preceding claim, wherein the joint monitoring device (404) is disposed across the joint (220) between the first rotor blade member (118) and the second rotor blade member (128).

4. The split wind turbine rotor blade (108) of any preceding claim, wherein each of the first and second rotor blade members (118, 128) comprises a first shell (310), a second shell (320), a first spar cap (302), a second spar cap (302), and at least one shear web (304).

5. The split wind turbine rotor blade (108) of any preceding claim, wherein the joint monitoring device (404) is disposed across the joint (220) and coupled between the first spar cap (302) of the first rotor blade member (118) and the first spar cap (302) of the second rotor blade member (128).

6. The split wind turbine rotor blade (108) of any preceding claim, wherein the joint monitoring device (404) is disposed across the joint (220) and coupled between the first spar cap (302) of the first rotor blade member (118) and the second spar cap (302) of the second rotor blade member (128).

7. The split wind turbine rotor blade (108) of any preceding claim, wherein the joint monitoring device (404) is disposed across the joint (220) and coupled to the at least one shear web (304).

8. A system for monitoring a joint (220) of a split wind turbine blade (108), comprising:
a joint monitoring device (404) disposed on the split wind turbine blade (108) for monitoring a structural parameter of the joint (220); and
a controller (520) configured to receive monitored parameter data from the joint monitoring device (404) and determine whether the monitored parameter data meets or exceeds a predetermined threshold value for the monitored structural parameter.

9. The system of claim 8, wherein the controller (520) is further configured to cause an automatic shutdown of a wind turbine (100) if monitored parameter data from a joint monitoring device (404) of the wind turbine (100) meets or exceeds a predetermined threshold value for a monitored structural parameter.

10. A method of monitoring joint (220) efficiency of a joint (220) in a split wind turbine blade (108), the method comprising:
receiving parameter data from a joint monitoring device (404), the joint monitoring device (404) monitoring a structural parameter of the joint (220);
determining if the received parameter data meets or exceeds a threshold level; and
generating a joint (220) efficiency control signal if the received parameter data meets or exceeds the threshold level.
